# EUROPEAN PATENT APPLICATION

(11) **EP 2 833 462 A1**
(43) Date of publication of application: **04.02.2015**
(21) Application number: 12873283.1
(22) Date of filing: 28.03.2012
(51) Int. Cl.: H01M 10/0525, H01M 4/587

(54) **SOLID ELECTROLYTE BATTERY**

(71) Applicant: Ocean's King Lighting Science&Technology Co., Ltd., Guangdong 518054 (CN); Shenzhen Ocean's King Lighting Engineering Co., Ltd., Shenzhen, Guangdong 518054 (CN)
(72) Inventor: ZHOU, Mingjie, Shenzhen Guangdong 518054 (CN); ZHONG, Linglong, Shenzhen Guangdong 518054 (CN); WANG, Yaobing, Shenzhen Guangdong 518054 (CN)
(74) Representative: Grosse, Rainer
(86) International application number: PCT/CN2012/073186
(87) International publication number: WO 2013/143085

(57) **Abstract**

A solid electrolyte battery comprises a positive plate (1), a negative plate (2), several composite electrode plates (3) and several solid electrolyte (4), wherein the number of the solid electrolyte (4) is one more than the number of the composite electrode plates (3). The positive plate (1) and the negative plate (2) are spaced oppositely, the composite electrode plates (3) are between the positive plate (1) and the negative plate (2), and both sides of the composite electrode plates (3) are laminated with the positive plate (1) and the negative plate (2) by the solid electrolyte (4), respectively, the structure of the solid electrolyte battery is formed. There is the solid electrolyte battery according to the invention, because the all surfaces of the positive plate(1), the composite electrode plates (3), the negative plate (2) are coated by the positive active material and/or negative material which may form the positive and negative capacitor structures, the positive active material and the negative active material can form good layered laminate structure with the solid electrolyte (4), thus internal resistance of battery is greatly reduced, so as to benefit migration of ions, therefore capacity of battery is improved.

## Description

### TECHNICAL FIELD

The present invention relates to the field of battery, in particular to a solid electrolyte battery.

### BACKGROUND ART

Recently, many types of portable electronic devices, such as VCRs with built-in camera, portable phones or portable computers have debuted, people are committed to reducing their size and weight. Meanwhile, these portable electronic devices commonly employ secondary battery. In such secondary battery, researches and experiments of thin lithium batteries, foldable battery have been carried out vigorously. For the electrolyte of these batteries, a great effort has been made on their researches. In particular, a polymeric solid electrolyte having a lithium salt dissolved in the polymer material or a gelled solid electrolyte comprising a plasticizer has attracted much attention.

The reduction of the thickness of a battery by a solid electrolyte makes more sense than using a liquid electrolyte, while there is no risk of battery leakage. However, as in use in a battery, solid electrolyte is not a liquid of the liquid electrolyte, its contact with an electrode is not fully submerged as that in the case of a liquid electrolyte. Accordingly, the incomplete contact between the solid electrolyte and the electrodes adversely affects the performance of a battery. For example, the contact resistance between the solid electrolyte and the electrodes as well as the internal resistance of the battery are increased; in addition, lithium ions cannot migrate in an ideal state between the solid electrolyte and the electrodes, and the capacity of battery is thus reduced.

### DISCLOSURE OF THE INVENTION

The technical problem aimed to be solved of the present invention is to provide a solid electrolyte battery exhibiting a small internal resistance of the battery and a large capacity of battery.

A solid electrolyte battery, comprising a positive plate, a negative plate, several composite electrode plates and several solid electrolyte, and the number of the solid electrolyte is one more than the number of the composite electrode plates; the positive plate and the negative plate are spaced oppositely, the composite electrode plates are between the positive plate and the negative plate, and both sides of the composite electrode plates are laminated with the positive plate and the negative plate by the solid electrolyte, respectively, and the structure of the solid electrolyte battery is formed; wherein,

said positive plate comprises a positive electrode current collector and a positive active material coated on the surface of the positive electrode current collector;

said negative plate comprises a negative electrode current collector and a negative active material coated on the surface of the negative electrode current collector;

said composite electrode plates comprise a composite electrode current collector and a positive active material and a negative active material coated on both sides of the composite electrode current collector;

in the structure of said solid electrolyte battery, the positive active material on the positive plate and the negative active material on the composite electrode plate are laminated oppositely by one solid electrolyte, while the negative active material on the negative plate and the positive active material on the composite electrode plate are laminated oppositely by another solid electrolyte.

In said solid electrolyte battery, the positive active material is lithium salt of graphite oxide derivative, and the graphite oxide surface of said lithium salt of graphite oxide derivative is grafted with poly(ethylene oxide), and the poly(ethylene oxide) chain end is lithium hydroxyl; the negative active material is graphene , and the graphene surface is grafted with poly(ethylene oxide).

In said solid electrolyte battery, a conducting agent is comprised in both the positive active material and the negative active material. The incorporation of the conducting agent provides a conducting property; said conducting agent is acetylene black.

In said solid electrolyte battery, said solid electrolyte comprises a lithium salt, poly(ethylene oxide) and a plasticizer, and the ratio of the poly(ethylene oxide) and the lithium salt being used is calculated according to the molar amount of the elemental oxygen and elemental lithium, the molar ratio of the elemental oxygen and the elemental lithium is 5∼20:1; said plasticizer accounts for 5∼50% of the total mass; said lithium salt comprises at least one of LiPF₆, LiBF₄, LiCF₃SO₃, LiN(SO₂CF₃)₂ and LiAsF₆; said plasticizer is selected from carbonates or polar solvents; said carbonates are preferably ethylene carbonate, propylene carbonate or diethyl carbonate; said polar solvent is ethylene glycol dimethyl ether or dimethyl sulfoxide.

In said solid electrolyte battery, said positive electrode current collector is preferably an aluminium foil; said negative electrode current collector is preferably a copper foil; said composite electrode current collector is preferably a titanium foil.

In the solid electrolyte battery of the present invention, since the surfaces of the positive plate, the composite electrode plates and the negative plate are all coated with a positive active material and a negative active material which may form a positive and negative capacitor structure, the positive active material and the negative active material can form a good layered laminate structure with a solid electrolyte, whereby the internal resistance of the battery can be significantly reduced, which facilitates the migration of ions, and thus improves the capacity of battery.

In addition, the outer surfaces of the positive active material and the negative active material are all coated with poly(ethylene oxide), since poly(ethylene oxide) and the solid electrolyte has good compatibility with each other, lithium ions in the solid electrolyte can diffuse properly to the positive active material and the negative active material, whereby the internal resistance of the battery can be significantly reduced; lithium ions migrate actively between the solid electrolyte and the positive active material and the negative active material,, whereby the battery capacity is thus improved.

### BRIEF DESCRIPTION OF THE DRAWING

Figure 1 shows a schematic view of the structure of the solid electrolyte battery in the preferred embodiment; wherein n is the number of the solid electrolyte and the composite electrode plates after lamination, a positive integer is taken.
Figure 2 shows a schematic view of the structure of the solid electrolyte battery in the preferred embodiment; wherein the number of the solid electrolyte and the composite electrode plates after lamination is one.
Figure 3 shows a schematic view of the structure of the solid electrolyte battery in the preferred embodiment; wherein the number of the solid electrolyte and the composite electrode plates after lamination is three.
Figure 4 shows a comparative plot of the capacity of battery of the solid electrolyte battery prepared in example 1 and comparative example 1.

### DETAILED DESCRIPTION OF THE EMBODIMENTS

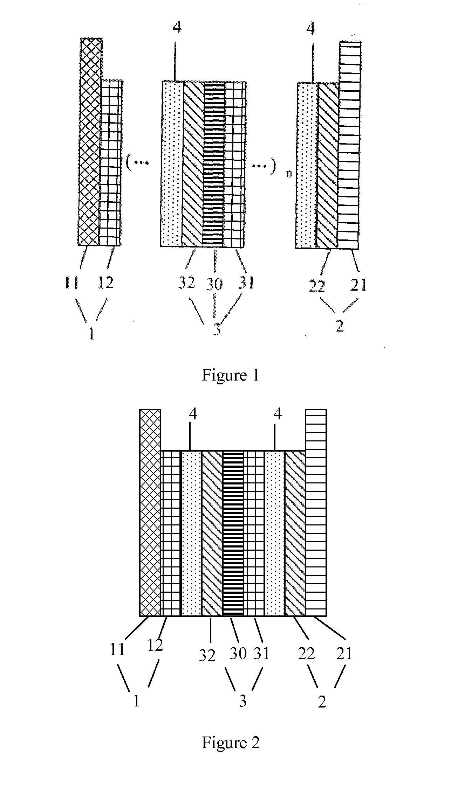

The present invention provides a solid electrolyte battery as shown in figure 1, comprising a positive plate 1, a negative plate 2, several composite electrode plate 3 and several solid electrolyte 4, wherein the number of the solid electrolyte 4 is one more than the number of the composite electrode plate 3; the positive plate 1 and the negative plate 2 are spaced oppositely, the composite electrode plate 3 are between the positive plate 1 and the negative plate 2, and both sides of the composite electrode plate 3 are laminated with the positive plate 1 and the negative plate 2 by the solid electrolyte 4, respectively, the structure of the solid electrolyte battery is formed, namely the positive plate/(solid electrolyte 4/the composite electrode plate 3)ₙ/solid electrolyte 4/the negative plate 2; n is the number of the solid electrolyte 4 and the composite electrode plate 3 after lamination, a positive integer is taken; wherein:

said positive plate 1 comprises a positive electrode current collector 11 and a positive active material 12 coated on the surface of the positive electrode current collector 11; said negative plate 2 comprises a negative electrode current collector 21 and a negative active material 22 coated on the surface of the negative electrode current collector 21; said composite electrode plate 3 comprise a composite electrode current collector 30 and a positive active material 31 and a negative active material 32 coated on both sides of the composite electrode current collector 30;

in the structure of said solid electrolyte battery, the positive active material 12 on the positive plate 1 and the negative active material 32 on the composite electrode plate 3 are laminated oppositely by one solid electrolyte 4 in forming one capacitor structure, while the negative active material 22 on the negative plate 2 and the positive active material 31 on the composite electrode plate 3 are laminated oppositely by another solid electrolyte 4, in forming another capacitor structure; two capacitor type solid electrolyte batteries in series connection is thus formed inside the entire solid electrolyte battery.

In the solid electrolyte battery, the positive active material is lithium salt of graphite oxide derivative, and the graphite oxide surface of said lithium salt of graphite oxide derivative is grafted with poly(ethylene oxide), and the poly(ethylene oxide) chain end is lithium hydroxyl; the negative active material is graphene, and the graphene surface is grafted with poly(ethylene oxide).

In said solid electrolyte battery, preferably, a conducting agent is comprised in both the positive active material and the negative active material. The incorporation of the conducting agent provides conducting property; said conducting agent is acetylene black.

In said solid electrolyte battery, said solid electrolyte comprises lithium salt, poly(ethylene oxide) and a plasticizer, and the ratio of the poly(ethylene oxide) and the lithium salt being used is calculated according to the molar amount of the elemental oxygen and elemental lithium, the molar ratio of the elemental oxygen and the elemental lithium is 5∼20:1; said plasticizer accounts for 5∼50% of the total mass; said lithium salt comprises at least one of LiPF₆, LiBF₄, LiCF₃SO₃, LiN(SO₂CF₃)₂ and LiAsF₆; said plasticizer is selected from carbonates or polar solvents; said carbonates are selected from ethylene carbonate, propylene carbonate dimethyl carbonate or diethyl carbonate, preferably ethylene carbonate, propylene carbonate or diethyl carbonate; said polar solvent is preferably ethylene glycol dimethyl ether, dimethyl sulfoxide, polyethylene glycol dimethyl ether or dibutyl phthalate, preferably ethylene glycol dimethyl ether or dimethyl sulfoxide.

In said solid electrolyte battery, all current collectors are metallic material, wherein said positive electrode current collector may be an aluminium mesh or an aluminium foil, preferably an aluminium foil; a negative electrode current collector is selected from a copper mesh or copper foil, preferably a copper foil; a composite electrode current collector is selected from a titanium mesh or a titanium foil, preferably a titanium foil.

In the above-mentioned embodiments, the number of the composite electrode plates and the solid electrolyte after lamination may be one, or ten more, or even over hundred. In the case the number of the composite electrode plates and the solid electrolyte after lamination is more than two, a battery structure is which a plurality of capacitors in series connection is formed, where the number of the capacitors being in series determines the output voltage of a battery.

As shown in Figure 2, the number of the composite electrode plates and the solid electrolyte after lamination is one, the structure of said solid electrolyte battery is: the positive plate 1/solid electrolyte 4/the composite electrode plate 3/solid electrolyte 4/the negative plate 2.

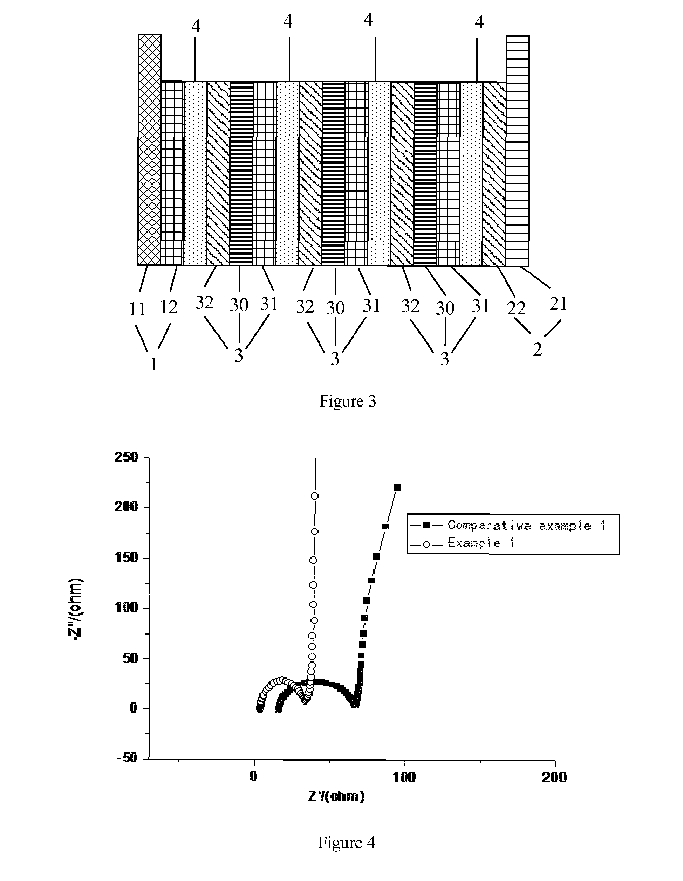

As shown in Figure 3, the number of the composite electrode plates and the solid electrolyte after lamination is three, the structure of said solid electrolyte battery is: the positive plate 1/solid electrolyte 4/the composite electrode plate 3/solid electrolyte 4/the composite electrode plates3/solid electrolyte 4/the composite electrode plate 3/solid electrolyte 4/the negative plate 2; namely the positive plate 1/ (solid electrolyte 4/the composite electrode plate 3) ₃/solid electrolyte 4/the negative plate 2.

In the solid electrolyte battery of the present invention, since the surfaces of the positive plate, the composite electrode plates, the negative plate are all coated with a positive active material and a negative active material which may form a positive and negative capacitor structure, the positive active material and the negative active material can form a good layered laminate structure with a solid electrolyte, whereby the internal resistance of the battery can be significantly reduced, which facilitates the migration of ions, and thus improves the capacity of battery.

In addition, the outer surfaces of the positive active material and the negative active material are all coated with poly(ethylene oxide), since poly(ethylene oxide) and the solid electrolyte has good compatibility with each other, lithium ions in the solid electrolyte can diffuse properly to the positive active material and the negative active material, whereby the internal resistance of the battery can be significantly reduced; lithium ions migrate actively between the solid electrolyte and the positive active material and the negative active material, whereby the capacity of battery is thus improved.

The above-mentioned process for preparing a solid electrolyte battery comprises the following process steps:
S1, the preparation of the positive active material, the negative active material and the solid electrolyte
the preparation of the positive active material: dissolving a lithium salt of graphite oxide derivative, a conducting agent and a PVDF binder in an organic solvent, to form a gelled positive active material;
the preparation of the negative active material: dissolving a lithium salt of graphene derivative, a conducting agent and a PVDF binder in an organic solvent, to form a gelled negative active material;
the preparation of the solid electrolyte: dissolving a lithium salt and poly(ethylene oxide) (PEO) in an organic solvent, followed by addition of a plasticizer, to form a gelled electrolyte liquid, drying, curing, in forming the solid electrolyte ;
S2, the preparation of the positive plate, the negative plate and the composite electrode plates
the preparation of the positive plate: coating the surface of a positive electrode current collector with the gelled positive active material, and standing for 1∼24h, so that the positive active material penetrate into the positive electrode current collector, a positive plate having a specified size is obtained by cutting after drying;
the preparation of the negative plate: coating the gelled negative active material on the surface of a negative electrode current collector, and standing for 1∼24h, so that the negative active material penetrate into the negative electrode current collector, a negative plate having a specified size is obtained by cutting after drying;
the preparation of the composite electrode plate: coating the gelled positive active material and the gelled negative active material on both surfaces of a composite electrode current collector, and standing for 1∼24h, so that the positive active material and the negative active material penetrate into the negative electrode current collector, respectively, a composite electrode plate having a specified size is obtained by cutting after drying;
S3, laminating the plates in the order of: the positive plate /(solid electrolyte /the composite electrode plates)ₙ/solid electrolyte /the negative plate; wherein, n is the number of the solid electrolyte and the composite electrode plates after lamination, a positive integer is taken;
S4, subjecting the laminated structure from step S3 to thermoforming to remove the residual organic solvent, to give a solid battery, as shown in figure 1.

In the above-mentioned process step, the conducting agent is acetylene black.

In the above-mentioned process step, said solid electrolyte comprises a lithium salt, poly(ethylene oxide) and a plasticizer, and the ratio of the poly(ethylene oxide) and the lithium salt being used is calculated according to the molar amount of the elemental oxygen and elemental lithium, the molar ratio of the elemental oxygen and the elemental lithium is 5∼20:1; said plasticizer accounts for 5∼50% of the total mass; said lithium salt comprises at least one of LiPF₆, LiBF₄, LiCF₃SO₃, LiN(SO₂CF₃)₂ and LiAsF₆; said plasticizer is selected from carbonates or polar solvents; said carbonates are preferably ethylene carbonate, propylene carbonate, dimethyl carbonate or diethyl carbonate; said polar solvent is preferably ethylene glycol dimethyl ether, dimethyl sulfoxide, polyethylene glycol dimethyl ether or dibutyl phthalate.

In the above-mentioned process step, said positive electrode current collector is selected from an aluminium foil and a negative electrode current collector is selected from a copper foil; said composite electrode current collector is selected from a titanium foil.

In the above-mentioned process step, said organic solvent is a tetrahydrofuran (THF) solution or a methylpyrrolidone (NMP) solution; preferably, a methylpyrrolidone (NMP) solution.

Detailed description to the preferable embodiments of the present invention will now be given with reference to the drawings.

### Example 1

### 1. Preparation of the positive active material, the negative active material and the solid electrolyte

Preparation of the positive active material: 90g of lithium salt of graphite oxide derivative, 5g of acetylene black and 5g of a PVDF binder were mixed at a mass ratio of 90:5:5, and dissolved in a tetrahydrofuran solution, to form a gelled positive active material;

Preparation of the negative active material: 90g of lithium salt of graphene derivative, 5g of acetylene black and 5g of a PVDF binder were mixed at a mass ratio of 90:5:5, and dissolved in a tetrahydrofuran solution, to form a gelled negative active material;

Preparation of the solid electrolyte: 10g of LiPF₆ and 14.5g of poly(ethylene oxide) (PEO) were dissolved in a tetrahydrofuran solution, such that a molar ratio of the elemental oxygen and LiPF₆ in PEO is 5:1, followed by addition of 1.3g ethylene carbonate plasticizer which accounts for 5% of the total mass, to form a gelled electrolyte liquid, dried, cured, to give the solid electrolyte;

### 2. Preparation of the positive plate, the negative plate and the composite electrode plates

Preparation of the positive plate: the surface of the positive electrode current collector was coated with a gelled positive active material, and standing for 1h, such that the positive active material penetrated into the positive electrode current collector, whereby a positive plate sized of 60mm x 40mm was obtained after dying and cutting;

Preparation of the negative plate: the surface of the negative electrode current collector was coated with a gelled negative active material, and standing for 1h, such that the negative active material penetrated into the negative electrode current collector, whereby a negative plate sized of 60mm x 40mm was obtained after dying and cutting;

Preparation of the composite electrode plates: both surfaces of the composite electrode current collector were coated with a gelled positive active material and a gelled negative active material, respectively, and standing for 1h, such that the positive active material and the negative active material penetrated into the negative electrode current collector, respectively, whereby a composite electrode plate having a specific size was obtained after dying and cutting;

### 3. the plates were laminated in the order of: the positive plate /solid electrolyte /the composite electrode plates/solid electrolyte /the negative plate.

### 4. the laminated structure from step S3 was subjected to thermoforming to remove the residual tetrahydrofuran solution, to give the solid battery

### Example 2

### 1. Preparation of the positive active material, the negative active material and the solid electrolyte

Preparation of the positive active material: 100g of lithium salt of graphite oxide derivative, 5.5g of acetylene black and 5.5g of a PVDF binder were mixed at a mass ratio of 90:5:5, and dissolved in a NMP solution, to form a gelled positive active material;

Preparation of the negative active material: 100g of lithium salt of graphene derivative, 5.5g of acetylene black and 5.5g of a PVDF binder were mixed at a mass ratio of 90:5:5, and dissolved in a NMP solution, to form a gelled negative active material;

Preparation of the solid electrolyte: 10g of LiBF₄ and 37.4g PEO were dissolved in a NMP solution, such that molar ratio of the elemental oxygen and LiBF₄ in PEO is 8:1, followed by addition of 8.4g of propylene carbonate which accounts for 15% of the total mass, to form a gelled electrolyte liquid, dried, cured, to give the solid electrolyte;

### 2. Preparation of the positive plate, the negative plate and the composite electrode plates

Preparation of the positive plate: the surface of the positive electrode current collector was coated with a gelled positive active material, and standing for 24h, such that the positive active material penetrated into the positive electrode current collector, whereby a positive plate sized of 60mm x 40mm was obtained after dying and cutting;

Preparation of the negative plate: the surface of the negative electrode current collector was coated with a gelled negative active material, and standing for 24h, such that the negative active material penetrated into the negative electrode current collector, whereby a negative plate sized of 60mm x 40mm was obtained after dying and cutting;

Preparation of the composite electrode plates: both surfaces of the composite electrode current collector were coated with a gelled positive active material and a gelled negative active material, respectively, and standing for 24h, such that the positive active material and the negative active material penetrated into the negative electrode current collector, respectively, whereby a composite electrode plate having a specific size was obtained after dying and cutting;

### 3. the plates were laminated in the order of: the positive plate / (solid electrolyte /the composite electrode plates) ₅/solid electrolyte /the negative plate.

### 4. the laminated structure from step 3 was subjected to thermoforming to remove the residual NMP solution, to give the solid battery.

### Example 3

### 1. Preparation of the positive active material, the negative active material and the solid electrolyte

Preparation of the positive active material: 95g of lithium salt of graphite oxide derivative, 5.3g of acetylene black and 5.3g of a PVDF binder were mixed at a mass ratio of 90:5:5, and dissolved in a NMP solution, to form a gelled positive active material;

Preparation of the negative active material: 95g of lithium salt of graphene derivative, 5.3g of acetylene black and 5.3g of a PVDF binder were mixed at a mass ratio of 90:5:5, and dissolved in a NMP solution, to form a gelled negative active material;

Preparation of the solid electrolyte: 10g of LiCF₃SO₃ and 28.4g PEO were dissolved in a NMP solution, such that molar ratio of the elemental oxygen and LiCF₃SO₃ in PEO is 10:1, followed by addition of 12.8g of diethyl carbonate plasticizer which accounts for 25% of the total mass, to form a gelled electrolyte liquid, dried, cured, to give the solid electrolyte;

### 2. Preparation of the positive plate, the negative plate and the composite electrode plates

Preparation of the positive plate: the surface of the positive electrode current collector was coated with a gelled positive active material, and standing for 5h, such that the positive active material penetrated into the positive electrode current collector, whereby a positive plate sized of 60mm x 40mm was obtained after dying and cutting;

Preparation of the negative plate: the surface of the negative electrode current collector was coated with a gelled negative active material, and standing for 5h, such that the negative active material penetrated into the negative electrode current collector, whereby a negative plate sized of 60mm x 40mm was obtained after dying and cutting;

Preparation of the composite electrode plates: both surfaces of the composite electrode current collector were coated with a gelled positive active material and a gelled negative active material, respectively, and standing for 5h, such that the positive active material and the negative active material penetrated into the negative electrode current collector, respectively, whereby a composite electrode plate having a specific size was obtained after dying and cutting;

### 3. the plates were laminated in the order of: the positive plate / (solid electrolyte /the composite electrode plates) ₂₀/solid electrolyte /the negative plate.

### 4. the laminated structure from step 3 was subjected to thermoforming to remove the residual NMP solution, to give the solid battery.

### Example 4

### 1. Preparation of the positive active material, the negative active material and the solid electrolyte

Preparation of the positive active material: 80g of lithium salt of graphite oxide derivative, 4.4g of acetylene black and 4.4g of a PVDF binder were mixed at a mass ratio of 90:5:5, and dissolved in a tetrahydrofuran solution, to form a gelled positive active material;

Preparation of the negative active material: 80g of lithium salt of graphene derivative, 4.4g of acetylene black and 4.4g of a PVDF binder were mixed at a mass ratio of 90:5:5, and dissolved in a tetrahydrofuran solution, to form a gelled negative active material;

Preparation of the solid electrolyte: 10g of LiN(SO₂CF₃)₂ and 23.0g poly(ethylene oxide)PEO were dissolved in a tetrahydrofuran solution, such that molar ratio of the elemental oxygen and LiN(SO₂CF₃)₂ in PEO is 15:1, followed by addition of 17.8g of ethylene glycol dimethyl ether plasticizer which accounts for 35% of the total mass, to form a gelled electrolyte liquid, dried, cured, to give the solid electrolyte;

### 2. Preparation of the positive plate, the negative plate and the composite electrode plates

Preparation of the positive plate: the surface of the positive electrode current collector was coated with a gelled positive active material, and standing for 10h, such that the positive active material penetrated into the positive electrode current collector, whereby a positive plate sized of 60mm x 40mm was obtained after dying and cutting;

Preparation of the negative plate: the surface of the negative electrode current collector was coated with a gelled negative active material, and standing for 10h, such that the negative active material penetrated into the negative electrode current collector, whereby a negative plate sized of 60mm x 40mm was obtained after dying and cutting;

Preparation of the composite electrode plates: both surfaces of the composite electrode current collector were coated with a gelled positive active material and a gelled negative active material, respectively, and standing for 10h, such that the positive active material and the negative active material penetrated into the negative electrode current collector, respectively, whereby a composite electrode plate having a specific size was obtained after dying and cutting;

### 3. the plates were laminated in the order of: the positive plate / (solid electrolyte /the composite electrode plates) ₅₀/solid electrolyte /the negative plate.

### 4. the laminated structure from step 3 was subjected to thermoforming to remove the residual tetrahydrofuran solution, to give the solid battery.

### Example 5

### 1. Preparation of the positive active material, the negative active material and the solid electrolyte

Preparation of the positive active material: 85g of lithium salt of graphite oxide derivative, 4.7g of acetylene black and 4.7g of a PVDF binder were mixed at a mass ratio of 90:5:5, and dissolved in a tetrahydrofuran solution, to form a gelled positive active material;

Preparation of the negative active material: 85g of lithium salt of graphene derivative, 4.7g of acetylene black and 4.7g of a PVDF binder were mixed at a mass ratio of 90:5:5, and dissolved in a tetrahydrofuran solution, to form a gelled negative active material;

Preparation of the solid electrolyte: 10g of LiAsF₆ and 44.9g PEO were dissolved in a tetrahydrofuran solution, such that the molar ratio of the elemental oxygen and LiAsF₆ in PEO is 20:1, followed by addition of 27.5g of dimethyl sulfoxide plasticizer which accounts for 50% of the total mass, to form a gelled electrolyte liquid, dried, cured, to give the solid electrolyte;

### 2. Preparation of the positive plate, the negative plate and the composite electrode plates

Preparation of the positive plate: the surface of the positive electrode current collector was coated with a gelled positive active material, and standing for 15h, such that the positive active material penetrated into the positive electrode current collector, whereby a positive plate sized of 60mm x 40mm was obtained after dying and cutting;

Preparation of the negative plate: the surface of the negative electrode current collector was coated with a gelled negative active material, and standing for 15h, such that the negative active material penetrated into the negative electrode current collector, whereby a negative plate sized of 60mm x 40mm was obtained after dying and cutting;

Preparation of the composite electrode plates: both surfaces of the composite electrode current collector were coated with a gelled positive active material and a gelled negative active material, respectively, and standing for 15h, such that the positive active material and the negative active material penetrated into the negative electrode current collector, respectively, whereby a composite electrode plate having a specific size was obtained after dying and cutting;

### 3. the plates were laminated in the order of: the positive plate / (solid electrolyte /the composite electrode plates) ₁₀₀/solid electrolyte /the negative plate.

### 4. the laminated structure from step 3 was subjected to thermoforming to remove the residual tetrahydrofuran solution, to give the solid battery.

### Comparative Example 1

### 1. Preparation of the positive active material, the negative active material and the solid electrolyte

By comparison, the difference between comparative example 1 and example 1 lies in step 1, namely the preparation of the negative active material, the rest of the steps are identical to the corresponding steps of example 1.

Preparation of the positive active material: 90g of lithium salt of graphite oxide, 5g of acetylene black and 5g of a PVDF binder were mixed at a mass ratio of 90:5:5, and dissolved in a tetrahydrofuran solution, to form a gelled positive active material;

Preparation of the negative active material: 90g of graphene, 5g of acetylene black and 5g of a PVDF binder were mixed at a mass ratio of 90:5:5, and dissolved in a tetrahydrofuran solution, to form a gelled negative active material.

Figure 4 shows a comparative plot of the capacity of battery of the solid electrolyte battery prepared in example 1 and comparative example 1; from Figure 4, the semicircular curve of example 1 is less than the semicircular curve of comparative Example 1, indicating that the internal resistance of the solid electrolyte battery prepared in Example 1 is reduced, that is the capacity of battery is improved.

Although the preferable embodiments of the present invention has been described and illustrated in detail, it is clearly understood that the same is not to be taken by way of limitation, it should be understood that various changes, substitutions, and alterations could be made hereto without departing from the spirit and scope of the invention as defined by the appended claims.

## Claims

1. A solid electrolyte battery, **characterized in that**, comprising a positive plate, a negative plate, several composite electrode plates and several solid electrolyte, and the number of the solid electrolyte is one more than the number of the composite electrode plates; the positive plate and the negative plate are spaced oppositely, the composite electrode plates are between the positive plate and the negative plate, and both sides of the composite electrode plates are laminated with the positive plate and the negative plate by the solid electrolyte, respectively, and the structure of the solid electrolyte battery is formed; in which,
said positive plate comprises a positive electrode current collector and a positive active material coated on the surface of the positive electrode current collector;
said negative plate comprises a negative electrode current collector and a negative active material coated on the surface of the negative electrode current collector;
said composite electrode plates comprise a composite electrode current collector and a positive active material and a negative active material coated on both sides of the composite electrode current collector;
in the structure of said solid electrolyte battery, the positive active material on the positive plate and the negative active material on the composite electrode plates are laminated oppositely by one solid electrolyte, while the negative active material on the negative plate and the positive active material on the composite electrode plates are laminated oppositely by another solid electrolyte.

2. A solid electrolyte battery according to claim 1, **characterized in that** the positive active material is lithium salt of graphite oxide derivative, and the graphite oxide surface of said lithium salt of graphite oxide derivative is grafted with poly(ethylene oxide), and the poly(ethylene oxide) chain end is lithium hydroxyl; the negative active material is graphene, and the graphene surface is grafted with poly(ethylene oxide).

3. A solid electrolyte battery according to claim 1 or 2, **characterized in that** a conducting agent is comprised in both the positive active material and the negative active material.

4. A solid electrolyte battery according to claim 3, **characterized in that** said conducting agent is acetylene black.

5. A solid electrolyte battery according to claim 1, **characterized in that** said solid electrolyte comprises a lithium salt, poly(ethylene oxide) and a plasticizer, and the ratio of the poly(ethylene oxide) and the lithium salt being used is calculated according to the molar amount of the elemental oxygen and elemental lithium, the molar ratio of the elemental oxygen and the elemental lithium is 5∼20:1; said plasticizer accounts for 5∼50% of the total mass.

6. A solid electrolyte battery according to claim 5, **characterized in that** said lithium salt comprises at least one of LiPF₆, LiBF₄, LiCF₃SO₃, LiN(SO₂CF₃)₂ and LiAsF₆.

7. A solid electrolyte battery according to claim 5, **characterized in that** said plasticizer is selected from carbonates or polar solvents.

8. A solid electrolyte battery according to claim 7, **characterized in that** said carbonates is selected from ethylene carbonate, propylene carbonate or diethyl carbonate.

9. A solid electrolyte battery according to claim 7, **characterized in that** said polar solvent is selected from ethylene glycol dimethyl ether or dimethyl sulfoxide.

10. A solid electrolyte battery according to claim 1, **characterized in that** said positive electrode current collector is an aluminium foil; said negative electrode current collector is a copper foil; said composite electrode current collector is a titanium foil.
